(19) Europäisches Patentamt

European Patent Office

Office européen des brevets

(11) **EP 1 695 995 A1**

(12) **EUROPEAN PATENT APPLICATION**

(43) Date of publication:
**30.08.2006 Bulletin 2006/35**

(51) Int Cl.:
*C08K 3/36* (2006.01)     *C08L 23/00* (2006.01)
*C08K 7/00* (2006.01)     *C08J 3/20* (2006.01)

(21) Application number: **05101388.6**

(22) Date of filing: **24.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Dutch Polymer Institute**
**5600 AX Eindhoven (NL)**

(72) Inventors:
• **Jain, Sachinkumar Dr.**
**5612 ED, Eindhoven (NL)**

• **Goossens, Johannes Gerardus Petrus Dr.**
**5473 DK, Heeswijk-Dinther (NL)**
• **Peters, Gerardus Dr.**
**5246 RB, Rosmalen (NL)**

(74) Representative: **VA TECH Patente GmbH & Co**
**Stahlstrasse 21a**
**4031 Linz (AT)**

(54) **Novel nanocomposite**

(57)    The invention relates to a novel nanocomposite having improved processing characteristics. The nanocomposite comprises polyolefins and a nanofiller, selected from one or more of the group consisting of oxides of Si, Ti, Zr, Sn and Al. The dynamic viscosity of the nanocomposite including the nanofiller is lower than the dynamic viscosity of the nanocomposite without nanofiller.

EP 1 695 995 A1

**Description**

The invention relates to a novel nanocomposite, which comprises one or more polyolefins and one or more nanofillers.

It is well known that the design of polyolefin products is always a compromise between their processing characteristics and their mechanical properties. For easy and economic processing low molecular weights are required, while for good mechanical properties high molecular weights are required.

It has been tried to overcome this contradiction by tailoring the molecular weight distribution. This, however, has the consequence, that either stiffness or impact strength suffer. A further conventional approach to increasing the stiffness is to add fillers to the polyolefin. This however has the effect of deteriorating the impact strength. Opposite to that the addition of elastomer modifiers for increasing impact strength compromises the stiffness. A still further approach is to add nanometre sized fillers to the polyolefin. While this may have the intended effect, that the mechanical properties are improved, processing characteristics are mostly deteriorated as a consequence of the higher melt viscosity and melt elasticity.

It is the object of this invention to provide a nanocomposite, comprised of polyolefins and nanofiller, which has mechanical properties which are substantially unchanged or improved compared to the nanocomposite without nanofiller, and which nanocomposite has improved processing characteristics.

Surprisingly, it was possible to achieve the above object by a nanocomposite, comprising one or more polyolefins and a nanofiller, where the nanofiller is selected from one or more of the group consisting of oxides of Si, Ti, Zr, Sn and Al, and where the dynamic viscosity, determined according to ISO 6721-10 (1999), at a strain of 0.5% and at a frequency of 1 radian/s, of the nanocomposite including the nanofiller is lower than the dynamic viscosity of the nanocomposite without nanofiller.

The nanofillers which are used for the present invention are mesoporous. A porous material contains voids or tunnels of different shapes and sizes. Mesoporous materials are porous materials with regularly arranged, uniform mesopores (about 2nm to 50 nm in diameter, whereas micropores have pore widths of up to 2nm). They have large specific surface areas. This property is used for adsorbents or catalysts and examples of mesoporous materials include activated carbon used in deodorizer and silica gel used as desiccant. Typical examples are zeolites and zeolite-like materials, pillared or non-pillared clays, clathrasils and clathrates, carbon molecular sieves or mesoporous silica and silica-alumina.

The processability of any thermoplastic polymer composition, consequently also of the inventive nanocomposite, is defined largely by the melt viscosity under steady shear. While for most technically applied polymers a simple, yet empirical relation between the steady shear viscosity $\eta(\dot{\gamma})$ and the dynamic viscosity $\eta^*(\omega) = \text{sqrt}(G'^2 + G''^2)/\omega$ with $G'$ and $G''$ being the storage and loss moduli from a dynamic-mechanical test exists in the well-known Cox-Merz relation

$$\eta(\dot{\gamma}) = \eta^*(\omega) \text{ for } \dot{\gamma} = \omega$$

(literature: Cox W.P, Merz E.H., J.Polym.Sci. 28 (1958) 619-622)
complex systems may deviate from this relation. Nevertheless, relations in the dynamic viscosity between two thermoplastic polymer compositions are normally reflected in the steady shear viscosity and consequently in the processing behaviour as well. For reasons of precision and simplicity dynamic viscosity measurements are subsequently referred to characterise the processability. The calculation of the dynamic viscosity from the originally measured values of $G'$ and $G''$ at any frequency is only valid in the linear viscoelastic range of material behaviour, which implies an upper limit of strain applied in the measurement. For the inventive nanocomposite it has been found that a strain level of 0.5% yields both precise results and is well within the linear viscoelastic range of material response. Due to the viscoelastic nature of thermoplastic polymer compositions the steady shear viscosity changes as a function of shear rate $\gamma$ as consequently does the dynamic viscosity as a function of frequency $\omega$. Most relevant for the processability enhancement are reductions of the viscosity in the region of medium and low frequencies; a characteristic value at 1 rad/s can be taken for comparison.

It is assumed, that the high molecular weight chains of the polyolefins are selectively adsorbed on the surface of the mesoporous nanofillers. The adsorption of high molecular weight chains is a reversible process. As a result of the adsorption of the high molecular weight chains the dynamic viscosity is reduced and the processability improved, while mechanical properties are similar or slightly improved. In the molten state, the nanocomposite shows characteristics as if it were comprised of lower molecular weight chains, therefore the melt processing characteristics are improved, while in the solid state the nanocomposite shows the characteristics of the entire underlying polyolefin composition. Therefore mechanical properties are substantially unchanged, or, because of the nanofiller content, somewhat improved.

Nanocomposites with conventional nanofillers, e.g. layered silicates, montmorillonite, do not show the properties of nanocomposites according to the invention. Nanocomposites with conventional nanofillers show a viscosity increase with increasing filler concentration. See e.g. *Mechanical and rheological properties of maleated polypropylene-layered silicated nanocomposites with different morphology,* Chong Min Koo, Mi Jung Kim, Min Ho Choi, Sang ouk Kim, In Jae Chung, J. Appl. Polym. Sci, 2003, 88, 1526-1535 and *Preparation and linear rheological behavior of Polypropylene/ MMT nanocomposites,* Li Jian, Chixing Zhou, Wang Gang, Yu Wei, Tao Ying, Polymer composites 2003, 24(3), 323-331.

It is preferred, that the dynamic viscosity of the nanocomposite including the nanofiller is = 75 %, preferably = 50 %, more preferably = 10 % of the dynamic viscosity of the nanocomposite without nanofiller.

Nanocomposites having dynamic viscosities which are reduced to such = 75 %, preferably = 50 %, more preferably = 20 %, are particularly advantageous, because melt processing is especially facilitated.

It was observed, that - independent of the extent of the decrease in dynamic viscosity - mechanical properties did not deteriorate.

In order to achieve a significant viscosity reduction it is preferred that the weight average molecular weight ($M_w$) of the adsorbed fraction is at least 10 times higher than $M_w$ of the whole polymer composition (nanocomposite).

Advantageously, the nanofiller has a specific surface area of = 50 $m^2/g$ (determined according to BET method). Preferably, the nanofiller has a specific surface area of = 80 $m^2/g$, more preferably of = 100 $m^2/g$, most preferably of = 120 $m^2/g$.

A high specific surface area enhances the aforementioned selective adsorption of high molecular weight chains.

Advantageously, the nanofiller has a porosity of = 0.05 $cm^3/g$ (determined according to BET method). Preferably, the nanofiller has a porosity of = 0.1 $cm^3/g$ , more preferably of = 0.2 $cm^3/g$, most preferably of = 0.3 $cm^3/g$.

Like the specific surface, a high porosity is also beneficial for the adsorption process.

According to an advantageous embodiment of the present invention, the nanofiller is in a particulate shape or in the shape of fibres.

When the nanofiller is in a particulate shape, i.e. when all three dimensions are in the nanometre scale, it is particularly preferred, that the individual nanofiller particles are spherical or approximately spherical.

When the nanofiller is in the shape of fibres, i.e. when two dimensions are in the nanometre scale, it is particularly preferred, that the fibres are hollow fibres.

According to a preferred embodiment, the nanofiller, when in a particulate shape, has an average particle diameter of 5 - 250 nm, preferably of 5 -100 nm, more preferably of 5 - 70 nm, most preferably of 5 - 20 nm.

According to an alternative embodiment, the nanofiller is in the shape of hollow fibres, having an average length of from 0.1 -100 $\mu$m, preferably of 0.1 -10 $\mu$m, more preferably of 0.5-2 $\mu$m, individual fibres having an aspect ratio of 1 -1000, preferably of 5 -100 and having an average internal diameter of 5 - 700 nm, preferably of 5 - 200 nm, more preferably of 5 - 50 nm.

Advantageously, the nanofiller is silica and/or titanium dioxide, preferably silica.

Both of the abovementioned compounds are considered environmentally friendly and do not compromise the ecological profile of the inventive nanocomposite in comparison to the polyolefins without nanofiller.

For all types of nanofillers which are used in accordance with the present invention, it is preferred, that the nanofiller is present in an amount of 0.05-3.0 wt%, preferably of 0.1 - 2.0 wt%, more preferably of 0.1-1.0 wt%, based on the weight of the nanocomposite. The above concentration ranges are particularly applicable to particle-shaped nanofillers, especially to silica particle nanofillers.

For fibre-shaped nanofillers, the concentration range is up to 8 wt%, preferably 0.1 - 5 wt%, more preferably 0.1 - 3.5 wt%. For nanocomposites comprising polyethylene and particle-shaped nanofillers, especially silica particle nanofillers, the concentration range is also up to 8 wt%, preferably 0.1 -3 wt%.

Preferably the polyolefins which are used in the present invention are selected from homo-and copolymers of ethylene and/or $\alpha$-olefins having 3 -12 carbon atoms.

Particularly preferred are polyolefins, which are selected from homo- and copolymers of ethylene and/or propylene.

It is assumed that the present invention is based on the fact, that higher molecular weight molecules of the polyolefin are selectively adsorbed on the surface of the nanofillers, which are used for the present invention.

It is therefore preferred, that the polyolefin has a bimodal or multimodal or broad molecular weight distribution with $M_w/M_n$ = 2, preferably = 5.

According to a preferred embodiment, the polyolefin is a polypropylene having a weight-average molecular weight of $M_w$ = 300000 g/mol and a molecular weight distribution $M_w/M_n$ = 3. Preferably, a polypropylene has a molecular weight distribution $M_w/M_n$ = 5.

The propylene polymers may be produced by single- or multistage process polymerisation of propylene or propylene and $\alpha$-olefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactors. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110°C and at a pressure from 10 to 100 bar. Ziegler Natta catalysts as well as metallocene catalysts are suitable catalysts.

One skilled in the art is aware of the various possibilities to produce propylene homo- and copolymers and will easily find out a suitable procedure to produce suitable polymers which are used in the present invention.

According to an alternative embodiment, the polyolefin is a polyethylene with a density = 935 kg/m$^3$ having a broad or bimodal molecular weight distribution with a weight average molecular weight $M_w$ of = 300000 g/mol and a molecular weight distribution $M_w/M_n$ = 10. Preferably, $M_w/M_n$ is = 20.

Such polyethylenes are especially suitable for application in pressure pipes and may be produced by a single- or multistage process by polymerisation of ethylene using alpha-olefins like 1-butene, 1-hexene or 1-octene as comonomers for density regulation. Preferably, a multi-stage process is applied in which both the molecular weight and the comonomer content can be regulated independently in the different polymerisation stages. The different stages can be carried out in liquid phase using suitable diluents and/or in gas phase at temperatures of 40 -110 °C and pressures of 10 to 100 bar. A suitable catalyst for such polymerisations is either a Ziegler-type titanium catalyst or a single-site catalyst in heterogeneous form

According to a further embodiment, the polyolefin is a polyethylene having a weight-average molecular weight $M_w$ = 800000 g/mol and a molecular weight distribution $M_w/M_n$ = 8.

The above high molecular weight polyethylene, which is according to this embodiment used for the present invention, may be produced by standard Ziegler-Natta catalysis, as it is also applied for HDPE.

It has been found, that the conventional way for producing nanocomposites, i.e. melt compounding a mixture of particulate nanofiller, e.g. commercially available silica nanoparticles or layered nanoclay, and polyolefin is not suitable for the present invention. Nanocomposites which are prepared in this way do not have the intended combination of properties. In particular, the melt processing properties are not improved.

A nanocomposite according to the present invention is obtained by

a) preparing nanofiller particles in-situ in polyolefin using a sol-gel method or

b) by preparing nanofibers ex-situ with respect to polyolefin using a templating method and subsequent mixing of the nanofibers with polyolefin. Preferably, the nanofibers are dispersed in a solution of polyolefin, followed by removal of the solvent.

The sol-gel method is known per se, see e.g. Wen J, Wilkes GL. Chem Mater 1996; 8:1667; Ellsworth MW, Novak BM, J Am Chem Soc 1991; 113: 2756.; Kim KD, Kim HT. J Sol-gel Sci Techn 2002; 25: 183. According to method a) a precursor compound is brought into contact with a porous polyolefin. A sol is produced by hydrolysing the precursor compound with an aqueous solution having a pH > 7. The sol is further gelled by keeping the polyolefin/sol at elevated temperature, e.g. 60-100 °C, for a couple of hours, e.g. for 2-24 hours. The thus obtained nanocomposite is dried.

Preferably, the polyolefin which is used for method a) is a porous polyolefin which is in a particulate shape. Preferred specific surface area of the porous polyolefin is 0.01 -1 m$^2$/g, preferred average particle size is 10 - 6000 $\mu$m.

The templating method for producing nanofibers is also known per se, see. e.g. H.Nakamura, Y.Matsui, Silica Gel Nanotubes Obtained by the Sol-Gel Method, J. Am. Chem. Soc, 1995, 117, 2651-2652.; F.Miyaji, S.A.Davis, J.P.H.Charmant, S.Mann, Organic Crystal Templating of Hollow Silica Fibers, Chem. Mater., 1999, 11, 3021-3024. According to method b) a precursor compound is added to an aqueous dispersion of dl-tartaric acid. Then an aqueous solution having a pH > 7 is added and the resulting nanofibers are isolated and added to a solution of polyolefin in an organic solvent. Finally, the solvent is removed to obtain the nanocomposite.

The nanofibers obtained by the above method are hollow nanofibers.

Preferred precursor compounds are tetraethyl orthosilicate (TEOS) and Titanium isopropoxide (TPOT).

According to method a) the nanocomposite is preferably prepared by preparing a mixture of one or more polyolefins with a compound of the formula $(R-O-)_nM$, where R is a linear or branched alkyl with 1 - 6 carbon atoms, n is an integer from 1 - 4 and M is selected from the group consisting of Si, Ti, Zr, Sn and Al, at a temperature of from 30-80 °C, adding an aqueous solution having a pH-value of > 7, where the molar ratio between $(R-O-)_nM$ and $H_2O$ is from 1:1 to 1:20, keeping the temperature of the mixture at 30 - 80 °C for 1 - 10 hours and raising the temperature to 50 -100 °C and keeping the temperature for 3-10 hours and drying the nanocomposite, optionally under vacuum.

According to method b) the nanocomposite is preferably prepared by preparing a mixture of 0.01 - 0.5 mol dl-tartaric acid in a solution of 84 - 98.8 mol% an aliphatic alcohol, preferably ethanol, and 1.2 -16 mol% $H_2O$, adding a compound of the formula $(R-O-)_nM$, where R is a linear or branched alkyl with 1 - 6 carbon atoms, n is an integer from 1 - 4 and M is selected from the group consisting of Si, Ti, Sn, Al and Zr, and where the molar ratio between $(R-O-)_nM$ and $H_2O$ is from 0.5:1 to 2:1, adding an aqueous solution having a pH-value of > 7, optionally purifying and isolating the precipitated nanofibers, adding the nanofibers to a solution of one or more polyolefins in an organic solvent, removing the organic solvent and drying the nanocomposite, optionally under vacuum.

Preferably, the aqueous solution having a pH-value of > 7 is a solution of $H_2O$ and $NH_4OH$. It is particularly preferred, that the amount of $NH_4OH$ is from 1 - 10 mol% based on the amount of $(R-O-)_nM$.

A still further object of the invention relates to a method for reducing the dynamic viscosity of a composition comprising one or more polyolefins.

This object is achieved by incorporating the polyolefin composition with a nanofiller, which is selected from one or more of the group consisting of oxides of Si, Ti, Zr, Sn and Al, by

a) preparing nanofiller particles in-situ in polyolefin using a sol-gel method or

b) by preparing nanofibers ex-situ with respect to polyolefin using a templating method and subsequent mixing of the nanofibers with polyolefin.

The melt viscosity is reduced with the nanocomposite according to the invention. The actual amount of reduction of the melt viscosity can be selected by selecting an appropriate concentration of nanofiller.

A nanocomposite according to the present invention can also be obtained by preparing, according to one of the methods specified above, a masterbatch which contains a high concentration of nanofiller and by subsequently diluting the masterbatch with polyolefin to the effective concentration of nanofiller.

The nanocomposites of the invention can be used for any type of articles, which are conventionally produced from polyolefin compositions. It has however been observed, that extruded and injection moulded articles, produced from the inventive nanocomposites, exhibit a reduced orientation, resulting in more isotropic morphology and properties in the finished products.

Articles, comprising a nanocomposite according to the present invention are therefore preferably obtained by extrusion or moulding, especially injection moulding.

According to an advantageous embodiment of the present invention, the nanocomposite comprises silica, either in particulate or fibrous shape.

For PP/silica nanocomposites the ratio of $Si(OSi)_4$ to $Si(OSi)_3(OH)$ was investigated by $^{29}Si$ NMR. For evaluating these measurements, the sum of the intensities of the peaks associated to $Si(OSi)_4$ (designated as $Q^4$), $Si(OSi)_3(OH)$ (designated as $Q^3$) and $Si(OSi)_2(OH)$ (designated as $Q^2$) is calculated as 100%. According to the results of the $^{29}Si$ NMR measurements of the PP/silica nanocomposites of the invention, it is preferred, that the integrated $Q^3$ intensity is at least 30%, more preferably ate least 40%, most preferably at least 50%. Commercially available silicas usually have an integrated $Q^3$ intensity of about 20%.

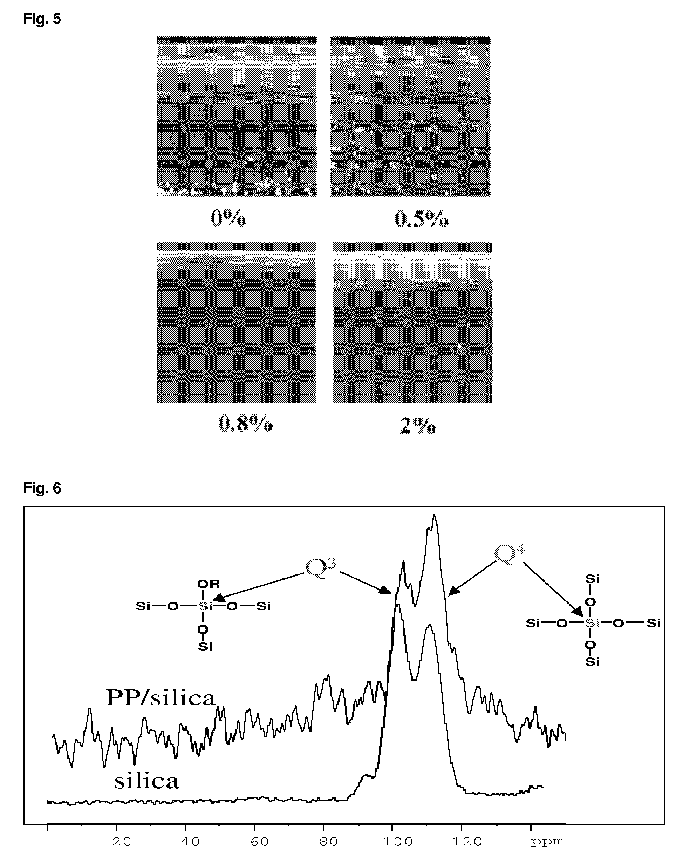

Fig. 6 shows a $^{29}Si$ NMR spectrum of a PP/silica particle nanocomposite according to the invention with a superimposed spectrum of the silica nanoparticles which are contained within the nanocomposite. The spectrum of the nanocomposite shows the typical peaks for silica and was deconvoluted to determine the exact ratio of internal structures.

**Measurement Methods**

**MFR**

The melt flow rates were measured with a load of 2.16 kg at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2.16 kg.

**Molar mass measurement**

Molar mass measurements for polypropylene were performed with a GPC method according to ISO 16014-4 at a temperature of 140 °C using 1,2,4-trichlorobenzene as solvent.

For polyethylene, the average molecular weight is calculated from Margolies-equation using intrinsic viscosity (dl/g) as determined according to ISO 1628-3:

$$M_w = 5.37 \times 10^4 \, [\eta]^{1.4}$$

where $M_w$ = average molecular weight (g/mol) and $[\eta]$ = intrinsic viscosity in decalin at 135 °C.

**Dynamic viscosity rheological properties**

Dynamic rheological properties were measured according to ISO 6721-10 (1999), on a rotational, controlled strain rheometer (RMS 800, Rheometrics Scientific), in plate-plate geometry with a gap of 0.5 mm. Usual measurement temperatures were 180 °C for polypropylene (except where otherwise specified) and 150 °C for polyethylene.

**High speed tensile impact test**

Impact tensile tests were performed on Impact bars at a speed of 1 m/s, using a Zwick Rel Hydraulic tensile testing machine. Piston displacement and force were measured at a sample rate of 2.5 MHz using a piezoelectric force transducer. The impact toughness energy was calculated by integrating the area under measured force-displacement curves and, dividing by the initial cross-section area behind the notch. At least 5 specimens were measured and average is reported. All tests were performed at room temperature.

**Tensile test**

Tensile test was performed according to ISO 527-3 using injection moulded specimens as described in EN ISO 1873-2 (dog bone shape, 3 mm thickness). Tensile modulus (E-modulus) was also determined according to ISO 527-3 and calculated from the linear part of the tensile test results.

**Chemical-structural Characterization**

Magic-angle-spinning (MAS) $^{29}$Si NMR was carried out on a Bruker DMX500 spectrometer operating at a $^{29}$Si NMR frequency of 99 MHz and equipped with a 7-mm MAS probe head and the sample rotation rate was 4 kHz (2 kHz for liquids). About 2000 scans were accumulated. MAS $^{29}$Si NMR was performed on nanocomposites powder to characterize the structure The two-pulse sequence 90°-τ-180°-τ- was used with a 90° pulse of 5 μs, an echo time 2τ of 15 μs, and an interscan delay of 180 s. Assignments for various degrees of *Si*-atom substitution of the SiO$_4$ tetrahedra are reported elsewhere [Qui G, Tang ZL, Huang NX, Gerking L. J Appl Polym Sci 1998; 81: 294. Otocka EP, Kwei TK, Salvoey R. Macromol Chem Phys 1969; 129: 144. Mauritz KA, Warren R. Macromolecules 1989; 67: 1799.] The peaks are located within the following range of chemical shifts relative to TMS [Si(Me)$_4$]: Q$^4$ = -106 to -120 ppm, Q$^3$ = -91 to -101 ppm, Q$^2$ = -74 to -93 ppm and Q$^1$ = -68 to -83 ppm.
**Particle sizes** of nanofillers were measured with TEM spectroscopy.
**Surface area** and **porosity** were measured according to the BET method, using nitrogen. The BET method of measuring surface area is described in the Journal of the American Chemical Society, Volume 60, page 304 (1930).

**Examples**

**1. Preparation of polypropylene/silica particle nanocomposites**

Polypropylene/silica particle nanocomposites were prepared by a sol-gel method. Tetra-ethyl orthosilicate (TEOS) was added to polypropylene under stirring for approx. 30 min at 60 °C. After the dispersion of TEOS, a mixture of water and NH$_4$OH was added slowly at a controlled rate with continuous stirring. The molar ratio of TEOS/H$_2$O was 1:5 and NH$_4$OH was 1wt% based on TEOS. The sol-gel reaction was carried out at 60 °C for 3hrs with continuous stirring. The thus formed sol in PP is then gelled at 80 °C for 5 hrs and dried under vacuum at 120 °C for 24 hrs. The obtained nanocomposite samples were physically mixed with antioxidant (0.5 wt% Irganox 1010) using a powder blender before further treatment and dried under vacuum at 100°C.
Samples were compression moulded in sheets at 180 °C. 8 and 25 mm diameter discs were cut for rheological measurements.
The **polypropylene (A)** which is used for the **PP/silica particle nanocomposites** has the following characteristics:

Homopolymer, having an MFR of 2.9 g/10 min and high isotacticity

| | |
|---|---|
| Specific surface area: | $S_{BET}(Kr)$ = 0.068 m$^2$/g |
| Density: | 0.909 g/cm$^3$ |
| Avg. particle size: | 500 μm |
| Pore size: | 500 nm -10 μm |

**Fig. 5** shows optical micrographs along the depth of injection moulded impact bars. Pure PP (A) shows a strong orientation not only at the wall, but also along the whole thickness. PP/silica particle nanocomposite (especially at concentrations of 0.8 and 2 wt%) show only some orientation at the wall and no orientation in the bulk of he impact bar. Also, the oriented layer is small, compared to pure PP.
Other possibilities for detecting the reduction of orientation and skin layer thickness resulting from the inventive compositions are FT infrared dichroism, polarised Raman or wide-angle X-ray diffraction measurements which all allow to measure the local orientation of molecules and crystallites in injection-molded parts.

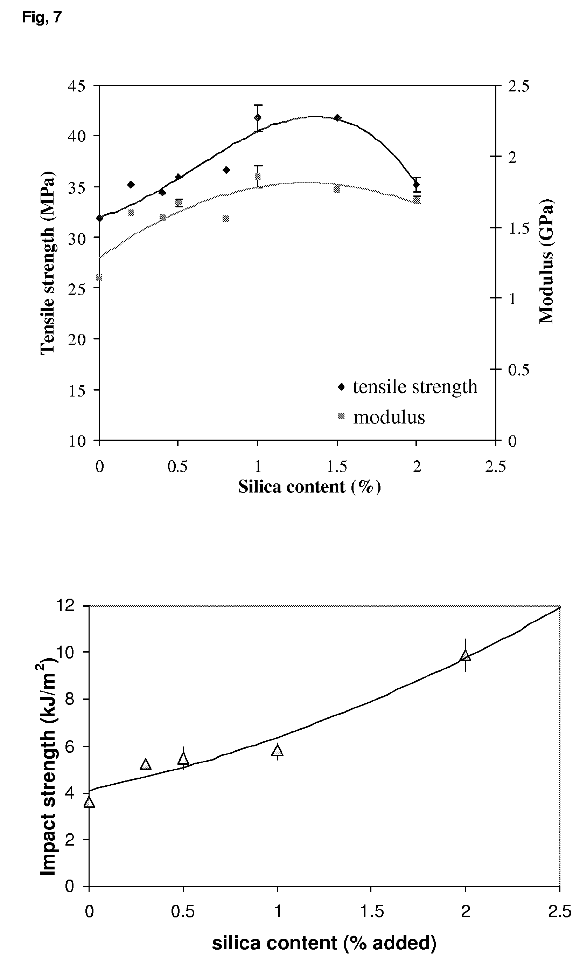

**Fig. 7** shows the mechanical properties of PP/silica particle nanocomposites of Example 1. Tensile as well as impact properties are improved.

The BET surface area of the silica nanoparticles is 140 $m^2/g$, porosity is 0.41 $cm^3/g$, with a micro pore volume of 0.045 $cm^3/g$.

### 2. Preparation of Polypropylene/silica fibre nanocomposites

### Preparation of silica nanofibers

Silica nanofibers were prepared according to a procedure as described by Nakamura et al. and Miyaji et al [*Silica Gel Nanotubes Obtained by the Sol-Gel Method,* J. Am. Chem. Soc, 1995, 117, 2651-2652]. A mixture of 5 ml ethanol and 0.06 g $H_2O$ with 0.02 g of dl-tartaric acid was prepared and 0.73 g of TEOS was added to this mixture without stirring. The mixture was allowed to stand for 30 minutes. Subsequently, 2 ml of 28 % $NH_4OH$ was slowly added and the solution was again allowed to stand for 30 minutes. The white precipitate was washed with water on a 400-mesh brass test sieve (Sigma-Aldrich Chemie GmbH, Steinheim, Germany) to remove colloidal aggregates. The obtained nanofibers were dried for 12 hrs in a vacuum oven at 100 °C.

### Preparation of PP/silica fibre nanocomposites

A 10 wt% solution of polypropylene was prepared by dissolving polypropylene pellets in xylene at 130 °C. Silica nanofibers were added and the mixture was stirred for 30 minutes. The solvent was removed at 90 °C under vacuum.

The **polypropylene (B)** which is used for the **PP/silica fibre nanocomposites** has the following characteristics:

Homopolymer, having an MFR of 15 g/10 min and high isotacticity

Density: 0.905 $g/cm^3$
$M_w$      350 kg/mol
$M_w/M_n$    5.6

### Molecular weight determinations

| Sample | $M_n$ | $M_w$ | $M_w/M_n$ |
|---|---|---|---|
| PP (A) | 61 | 380 | 6.2 |
| PP/silica nanoparticles (0.5 wt%) | 57 | 340 | 6.0 |

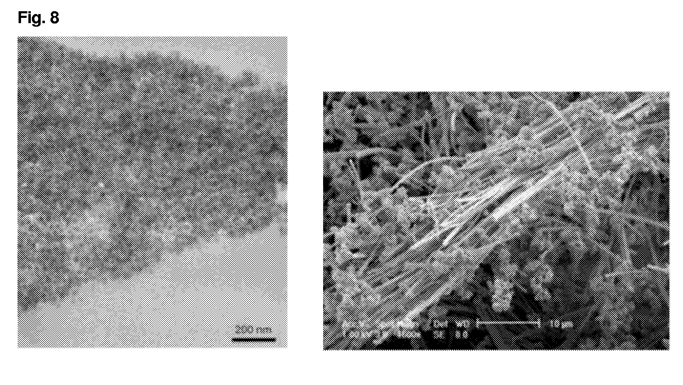

**Fig. 8** shows TEM pictures of silica nanoparticles and SEM pictures of silica nanofibers of examples 1 and 2.

**3. PE/silica particle nanocomposite** was prepared according to the procedure of example 1.

The polyethylene, which is used for PE/silica particle nanocomposite has the following properties:
Molecular weight, $M_w = 3.3 \times 10^6$ g/mol

Apparent Density:    > 0.4 $kg/m^3$
Avg. particle size:    150 $\mu$m
Pore size:        500 nm - 10 $\mu$m

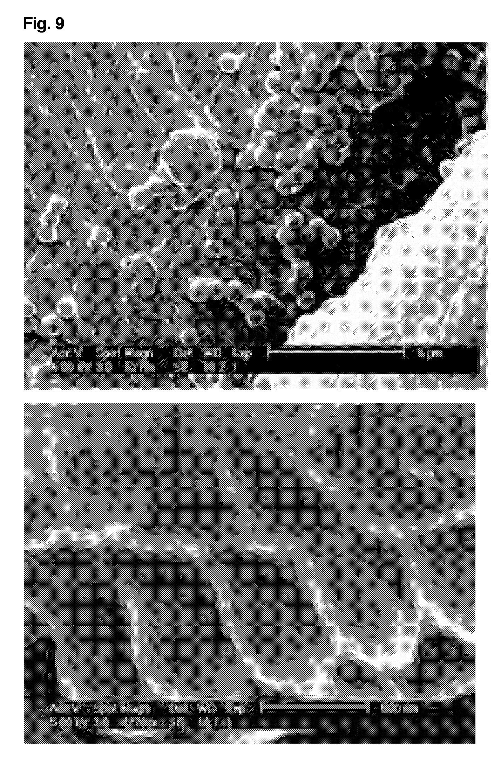

**Fig. 9** shows SEM pictures of PE/silica particle nanocomposites with 8 wt% silica particles in two different magnifications (5275x and 42203x).

### 4. Comparative example

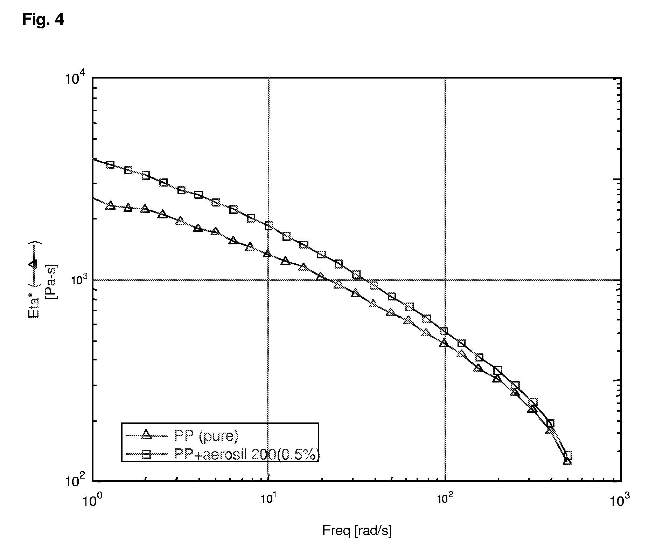

PP powder as used in example 1 is mixed with silica (Aerosil 200; avg. particle diameter = 12 nm; $SiO_2$ content > 99.8%) using a mechanical mixer (15 min at 50 rpm) and then this blend is extruded at 190 °C in a mini-extruder. The extruded composite is then compression moulded in sheets from which discs were cut and used for rheology measurements. The dynamic viscosity is measured at 190 °C. A comparison between the complex dynamic viscosity of these composites and the pure PP is shown in **Fig. 4**.

Aerosil 200 is a silicium dioxide as polymer additive, which is commercially available from Degussa. It is used for rheology and thixotropy control and also as anti-settling and thickening agent for polymers and liquid systems.

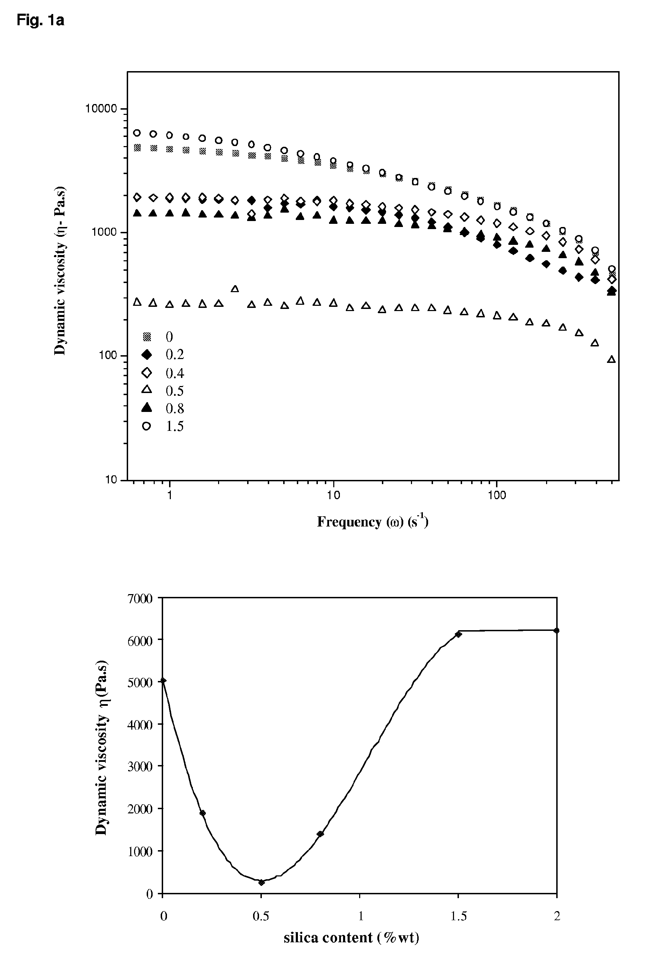

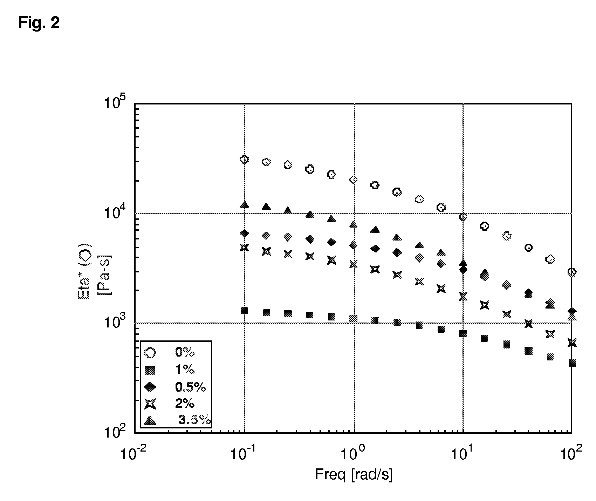

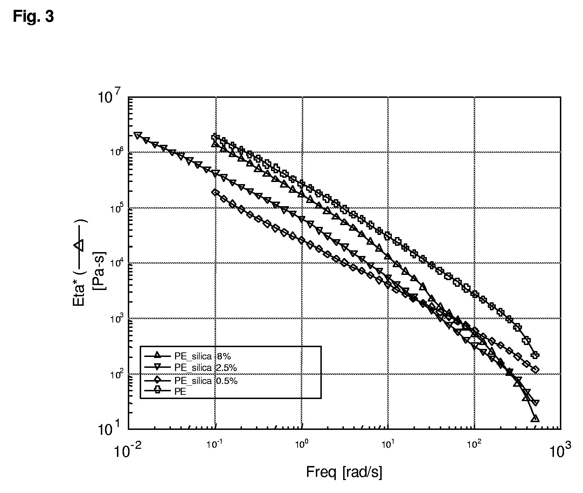

The dynamic viscosities of PP/silica particle nanocomposites, PP/silica fibre nanocomposites and PE/silica particle nanocomposite are shown in **figures 1 - 3**.

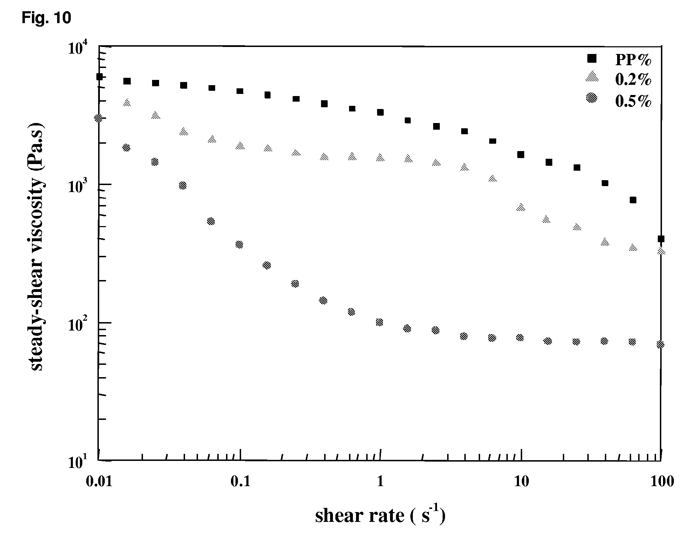

The steady state viscosity of PP/silica particle nanocomposites is shown in **Fig. 10**. The measurements were done on a rotational viscometer (Rheometrics ARES) using a plate-plate configuration with a diameter of 25 mm. Measurements were done in only one direction.

**List of figures**

Fig. 1a and 1b PP/silica particle nanocomposites
Fig. 2 PP/silica fibre nanocomposites
Fig. 3 PE/silica particle nanocomposite
Fig. 4 PP/aerosil 200
Fig. 5 Orientation of injection moulded PP vs. PP/silica particle nanocomposite
Fig. 6 $^{29}$Si NMR spectrum of PP/silica particle nanocomposite
Fig. 7 Mechanical parameters of PP and PP/silica particle nanocomposite
Fig. 8 TEM of silica particles and SEM of silica fibers.
Fig. 9 SEM of UHMWPE with 8 wt% silica particles
Fig. 10 steady state viscosity of PP/silica particle nanocomposites

**Claims**

1.  Nanocomposite, comprising
    one or more polyolefins and a nanofiller, where the nanofiller is selected from one or more of the group consisting of oxides of Si, Ti, Zr, Sn and Al, and where the dynamic viscosity, determined according to ISO 6721-10 (1999), at a strain of 0.5 % and at a frequency of 1 radian/s, of the nanocomposite including the nanofiller is lower than the dynamic viscosity of the nanocomposite without nanofiller.

2.  Nanocomposite according to claim 1, **characterised in that** the dynamic viscosity of the nanocomposite including the nanofiller is = 75 %, preferably = 50 %, more preferably = 10 % of the dynamic viscosity of the nanocomposite without nanofiller.

3.  Nanocomposite according to any one of claims 1 or 2, **characterised in that** the nanofiller has a specific surface area of = 50 $m^2$/g (determined according to BET method).

4.  Nanocomposite according to any one of claims 1 to 3, **characterised in that** the nanofiller has a porosity of = 0.1 $cm^3$/g.

5.  Nanocomposite according to any one of claims 1 to 4, **characterised in that** the nanofiller is in a particulate shape or in the shape of fibres.

6.  Nanocomposite according to claim 5, **characterised in that** the nanofiller is in a particulate shape, having an average particle diameter of 5 - 250 nm, preferably of 5 - 100 nm, more preferably of 5 -70 nm, most preferably of 5 - 20 nm.

7.  Nanocomposite according to claim 5, **characterised in that** the nanofiller is in the shape of hollow fibres, having an average length of from 0.1 - 100 $\mu$m, preferably of 0.1 - 10 $\mu$m, more preferably of 0.5 - 2 $\mu$m, individual fibres having an aspect ratio of 1 - 1000, preferably of 5 - 100 and having an average internal diameter of 5 - 700 nm, preferably of 5 - 200 nm, more preferably of 5 - 50 nm.

8.  Nanocomposite according to any one of claims 1 to 7, **characterised in that** the nanofiller is silica and/or titanium dioxide, preferably silica.

9. Nanocomposite according to any one of claims 1 to 8, **characterised in that** the nanofiller is present in an amount of 0.05 - 3.0 wt%, preferably of 0.1 - 2.0 wt%, more preferably of 0.1 -1.0 wt%, based on the weight of the nanocomposite.

10. Nanocomposite according to any one of claims 1 to 9 **characterised in that** the polyolefin is selected from homo- and copolymers of ethylene and/or α-olefins having 3-12 carbon atoms.

11. Nanocomposite according to claim 10, **characterised in that** the polyolefin is selected from homo- and copolymers of ethylene and/or propylene.

12. Nanocomposite according to any one of claims 1 to 11, **characterised in that** the polyolefin has a bimodal or multimodal or broad molecular weight distribution with $M_w/M_n = 2$, preferably = 5.

13. Nanocomposite according to any one of claims 1 to 12, **characterised in that** the polyolefin is a polypropylene having a weight-average molecular weight of $M_w = 300000$ g/mol and a molecular weight distribution $M_w/M_n = 5$.

14. Nanocomposite according to any one of claims 1 to 13, **characterised in that** the polyolefin is a polyethylene with a density = 935 kg/m$^3$ having a broad or bimodal molecular weight distribution with a weight average molecular weight $M_w = 300000$ g/mol and a molecular weight distribution $M_w/M_n = 10$.

15. Nanocomposite according to any one of claims 1 to 14, **characterised in that** the polyolefin is a polyethylene having a weight-average molecular weight $M_w = 800000$ g/mol and a molecular weight distribution $M_w/M_n = 8$.

16. Nanocomposite according to any one of claims 1 to 15, **characterised in that** it is obtained by
a) preparing nanofiller particles in-situ in polyolefin using a sol-gel method or
b) by preparing nanofibers ex-situ with respect to polyolefin using a templating method and subsequent mixing of the nanofibers with polyolefin.

17. Nanocomposite according to claim 16, **characterised in that** it is obtained by
a) preparing a mixture of one or more polyolefins with a compound of the formula $(R\text{-}O\text{-})_n M$, where R is a linear or branched alkyl with 1 - 6 carbon atoms, n is an integer from 1 - 4 and M is selected from the group consisting of Si, Ti, Sn, Al and Zr, at a temperature of from 30-80 °C, adding an aqueous solution having a pH-value of > 7, where the molar ratio between $(R\text{-}O\text{-})_n M$ and $H_2O$ is from 1:1 to 1:20, keeping the temperature of the mixture at 30 - 80 °C for 1 - 10 hours and raising the temperature to 50 - 100 °C and keeping the temperature for 3 - 10 hours and drying the nanocomposite, optionally under vacuum,
b) preparing a mixture of 0.01 - 0.5 mol dl-tartaric acid in a solution of 84 - 98.8 mol% an aliphatic alcohol, preferably ethanol, and 1.2 - 16 mol% $H_2O$, adding a compound of the formula $(R\text{-}O\text{-})_n M$, where R is a linear or branched alkyl with 1- 6 carbon atoms, n is an integer from 1 - 4 and M is selected from the group consisting of Si, Ti, Sn, Al and Zr, and where the molar ratio between $(R\text{-}O\text{-})_n M$ and $H_2O$ is from 0.5:1 to 2:1, adding an aqueous solution having a pH-value of > 7, optionally purifying and isolating the precipitated nanofibers, adding the nanofibers b a solution of one or more polyolefins in an organic solvent, removing the organic solvent and drying the nanocomposite, optionally under vacuum.

18. Method for reducing the dynamic viscosity of a composition comprising one or more polyolefins, **characterised in that** the polyolefin composition is incorporated with a nanofiller, which is selected from one or more of the group consisting of oxides of Si, Ti, Zr, Sn and Al by a) preparing nanofiller particles in-situ in polyolefin using a sol-gel method or
b) by preparing nanofibers ex-situ with respect to polyolefin using a templating method and subsequent mixing of the nanofibers with polyolefin.

19. Article, comprising a nanocomposite according to any one of claims 1 to 18, **characterised in that** it is obtained by extrusion or moulding.

**Fig. 1a**

**Fig. 2**

**Fig. 3**

**Fig. 4**

**Fig. 5**

0%          0.5%

0.8%          2%

**Fig. 6**

**Fig, 7**

**Fig. 8**

**Fig. 9**

**Fig. 10**

European Patent
Office

**EUROPEAN SEARCH REPORT**

Application Number

EP 05 10 1388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE CA [Online] CHEMICAL ABSTRACTS SERVICE, COLUMBUS, OHIO, US; 29 August 2001 (2001-08-29), ODA, TATSUAKI ET AL: "Silicon- and oxygen-containing plasticizers, their preparation, and polymer compositions therewith" XP002331490 retrieved from STN Database accession no. 2001:627059 * abstract * -& JP 2001 233992 A (ISHIZUKA GLASS CO., LTD., JAPAN) 28 August 2001 (2001-08-28) ----- | 1-6, 8-17,19 | C08K3/36 C08L23/00 C08K7/00 C08J3/20 |
| A | XIE X-L ET AL: "Rheological and mechanical properties of PVC/CaCO3 nanocomposites prepared by in situ polymerization" POLYMER, ELSEVIER SCIENCE PUBLISHERS B.V, GB, vol. 45, no. 19, 3 September 2004 (2004-09-03), pages 6665-6673, XP004602681 ISSN: 0032-3861 * page 6669, left column, second paragraph * ----- | 1-19 | |
| X | RONG M Z ET AL: "Structure-property relationships of irradiation grafted nano-inorganic particle filled polypropylene composites" POLYMER, ELSEVIER SCIENCE PUBLISHERS B.V, GB, vol. 42, no. 1, January 2001 (2001-01), pages 167-183, XP004208408 ISSN: 0032-3861 * abstract; figure 17 * ----- -/-- | 1-6, 8-13,16, 17,19 | TECHNICAL FIELDS SEARCHED (Int.Cl.7) C08K C08L C08J |

The present search report has been drawn up for all claims

| Place of search | Date of completion of the search | Examiner |
|---|---|---|
| Munich | 17 June 2005 | Meiners, C |

European Patent
Office

**EUROPEAN SEARCH REPORT**

Application Number

EP 05 10 1388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KIM J H ET AL: "Preparation and characterization of polypropylene/layered silicate nanocomposites using an antioxidant"<br>POLYMER, ELSEVIER SCIENCE PUBLISHERS B.V, GB,<br>vol. 45, no. 22,<br>13 October 2004 (2004-10-13), pages 7719-7727, XP004595821<br>ISSN: 0032-3861<br>* abstract; figure 5 *<br>----- | 1-4, 8-13,16, 17,19 | |
| X | LI JIAN, CHIXING ZHOU, WANG GANG, YU WEI, TAO YING: "Preparation and Linear Rheological Behavior of Polypropylene/MMT Nanocomposites"<br>POLYMER COMPOSITES,<br>vol. 24, no. 3, June 2003 (2003-06), pages 323-331, XP009048767<br>* figures 7,9 *<br>----- | 1-4, 8-13,16, 17,19 | |
| X | US 2003/055148 A1 (TANG TAO ET AL) 20 March 2003 (2003-03-20)<br><br>* paragraphs [0008], [0009]; examples 1-16 *<br>----- | 1,2,5,6, 8-13,16, 17,19 | TECHNICAL FIELDS SEARCHED (Int.Cl.7) |
| X | WO 2004/041721 A (POLYMERS AUSTRALIA PTY. LIMITED; MOAD, GRAEME; SIMON, GEORGE, PHILIP;) 21 May 2004 (2004-05-21)<br>* page 11, line 1 - page 12, line 15; example 8 *<br>-----<br>-/-- | 1-4, 8-15,19 | |

The present search report has been drawn up for all claims

| Place of search | Date of completion of the search | Examiner |
|---|---|---|
| Munich | 17 June 2005 | Meiners, C |

**European Patent Office**

**EUROPEAN SEARCH REPORT**

Application Number

EP 05 10 1388

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "In-Situ Nanocomposites Via Solid-State Modification In Porous Polymers" POLYMER PREPRINTS, vol. 44, no. 1, 2003, pages 1122-1123, XP009048837 * the whole document * | 1-6, 8-13,16, 17,19 | |
| X | DATABASE CA [Online] CHEMICAL ABSTRACTS SERVICE, COLUMBUS, OHIO, US; 18 August 2004 (2004-08-18), KWEE, TETY ET AL: "Morphology of silicate containing nanocomposites based on sol-gel processes in sulfonated linear and star poly(styrene-b-isobutylene-b- styrene) block copolymers" XP002331491 retrieved from STN Database accession no. 2004:670302 * abstract * & PMSE PREPRINTS , 91, 477-478 CODEN: PPMRA9; ISSN: 1550-6703, 2004, | 1-6, 8-10,12, 16-19 | TECHNICAL FIELDS SEARCHED (Int.Cl.7) |

The present search report has been drawn up for all claims

| Place of search | Date of completion of the search | Examiner |
|---|---|---|
| Munich | 17 June 2005 | Meiners, C |

EPO FORM 1503 03.82 (P04C01)

## ANNEX TO THE EUROPEAN SEARCH REPORT
## ON EUROPEAN PATENT APPLICATION NO.

EP 05 10 1388

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2005

| Patent document cited in search report | | Publication date | Patent family member(s) | | Publication date |
|---|---|---|---|---|---|
| JP 2001233992 | A | 28-08-2001 | NONE | | |
| US 2003055148 | A1 | 20-03-2003 | CN | 1338483 A | 06-03-2002 |
| WO 2004041721 | A | 21-05-2004 | AU | 2003287983 A1 | 07-06-2004 |
| | | | WO | 2004041721 A1 | 21-05-2004 |

EPO FORM P0459

For more details about this annex : see Official Journal of the European Patent Office, No. 12/82